# EUROPEAN PATENT SPECIFICATION

(11) **EP 1 354 779 B1**
(45) Date of publication and mention of the grant of the patent: **28.12.2005**
(21) Application number: 03252513.1
(22) Date of filing: 22.04.2003
(51) Int. Cl.: B62B 1/04

(54) **Golf trolley**
Golfwagen
Chariot de golf

(30) Priority: 19.04.2002 GB 0209011
(43) Date of publication of application: 22.10.2003
(73) Proprietor: Hawkes, Peter, Leyburn, North Yorkshire DL8 5BN (GB)
(72) Inventor: Hawkes, Peter, Leyburn, North Yorkshire DL8 5BN (GB)
(74) Representative: Crawford, Andrew Birkby

(56) References cited:
- FR-A- 2 736 839
- GB-A- 645 944
- US-A- 2 957 707
- US-A- 3 079 166
- US-A- 4 262 928

## Description

The present invention relates to a golf trolley.

Golf trolleys come in two distinct types. The first type is a manual push/pull trolley and the second type is a powered trolley. Manual trolleys are usually two-wheel with a skid member that stabilises the trolley when stationary but can be provided with a third, stabilising wheel to replace the conventional skid member. Powered trolleys more generally are three-wheel although there are some powered trolleys which have only two wheels. Additionally, trolleys can either be collapsible or demountable for easy transportation or fixed structures.

Although golf trolleys have been manufactured and used for a considerable number of years, they still leave much to be desired in terms of performance and ease of use.

US-A-4,262,928 discloses a golf trolley having a framework for holding golf clubs which in u-shaped tube connected to the framework. The wheels of the trolley are mounted to the u-shaped tube which forms a retainer for a torsion bar suspension system for the wheels.

FR-A-2,736,839 discloses a preferred foldable golf trolley. The wheels of the trolley are driven by a battery powered motor with the battery located on a tray which is pivotable on the axle for the wheels so as to be capable of being mounted in one of two positions depending on whether the trolley has two or three wheels.

The present invention provides a golf trolley having a golf club carrying structure and wheels, with at least one of the wheels connected to the structure by a resilient suspension, characterised in that the structure is arranged to receive a golf bag for the golf clubs, the wheels are connected to a subframe and the subframe is resiliently connected to the structure in order to provide the suspension.

Where the trolley is a three-wheel trolley, all three wheels can be attached to the structure by means of suspension units or only the main wheel can be provided with suspension.

Suspension can be fitted to a golf trolley whether or not it is powered.

From a second aspect, the present invention provides a foldable golf trolley having upper and lower golf bag supports spaced apart along the length of a central support member, the upper golf bag support being formed of two separate members which are spaced apart in the region of the central support member.

The advantage of the above construction is that, when folded, the upper bag support does not abut the central support but rather the central support is received in the gap between the upper bag support members in order to reduce the height of the trolley when folded.

In order that the present invention be more readily understood, embodiments thereof will now be described with reference to the accompanying drawings in which:-
Fig 1 shows a view of the lower section of the golf trolley construction according to the present invention and more particularly shows a suspension arrangement provided by the golf trolley;
Fig 2 shows a view of the top section of the golf trolley construction according to the present invention;
Fig 3 shows an alternative method for suspension which may be provided instead of the embodiment in Fig 2; and
Fig 4 shows a side view of the suspension which may be provided to the front wheel of the golf trolley.

The present invention will be described in relation to a foldable electric powered golf trolley. It should be appreciated, however, that this is merely one type of trolley to which the various features to be described can be applied. More particularly, the present invention provides a golf trolley with suspension so as to improve the performance when the trolley is crossing rough terrain. Suspension can be provided on any type of trolley whether or not it is powered and whether or not it is foldable.

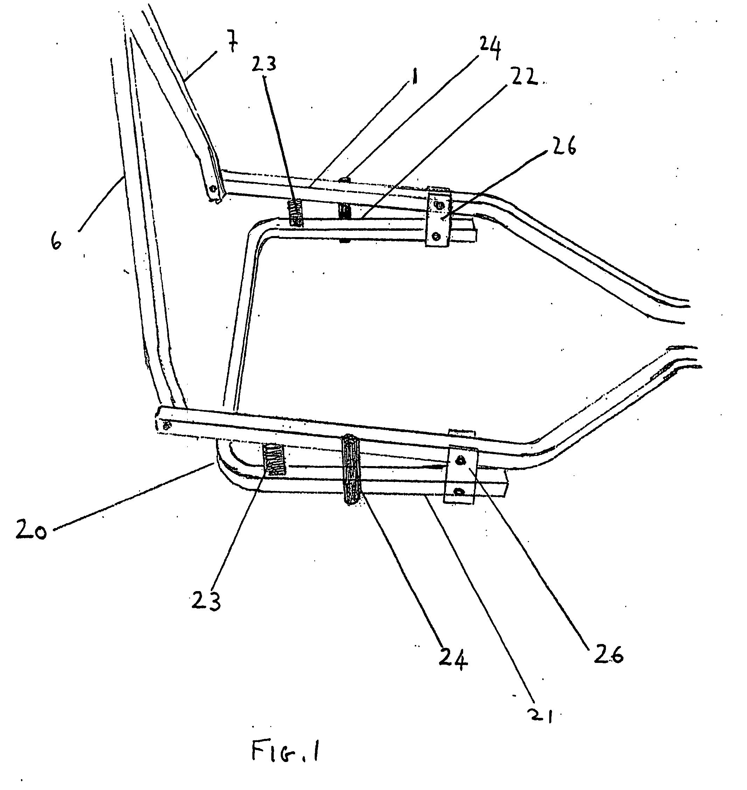

Turning now to Fig 1, this shows the lower section of a three-wheel trolley where the wheels are located at the apexes of a generally triangular framework 1. Two of the wheels are of the same diameter and larger than the third wheel (not shown) and the larger wheels (not shown) are used as the drive wheels for an electric motor (not shown) which is battery powered. If desired, the third, smaller wheel can be attached to the frame by a pivot joint to enable the third wheel to be folded flat when not in use.

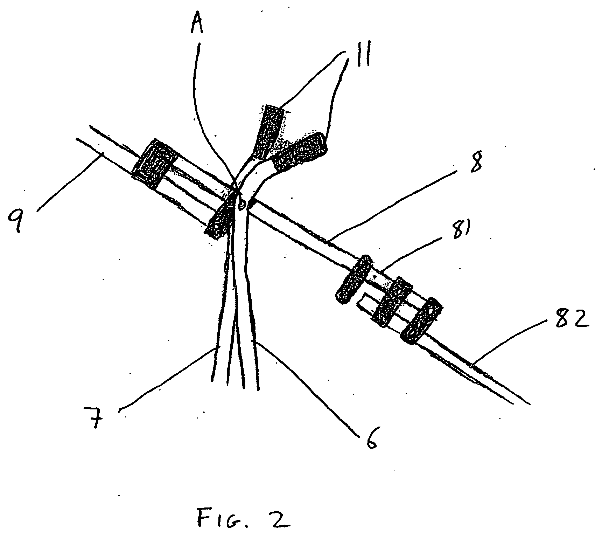

The rear portion of the triangular frame 1 is provided with two members 6,7. The top section of the trolley 10 will now be described by referring to Fig 2. The two members 6,7 are angled towards each other and join a central support member 8 at position A. The central support member 8 is also connected to the triangular frame work at a position near the third wheel.

As shown, the central support member 8 is made in two sections 81,82 so as to be foldable within the confines of the triangular frame 1 and is provided with a handle portion 9 which is also pivotally connected to the central support member 8 in the region of the connection A. The handled member 9 folds in the opposite sense to the central support member 8 so as to provide a Z fold action.

Upper 11 and lower (not shown) golf bag supports are provided on the central support member 8. The lower support member can take any convenient form and is usually fixed in position although it may well be foldable.

The upper bag support 11 is formed in two parts so as to provide a gap of at least the width of the central support member 8. This enables the central support member 8 to be completely collapsed on itself when folded which results in the upper bag support members 11 lying on either side of the lower central support member 82. It is most convenient if the upper bag support members are in fact extensions of the side frame members 6,7.

Attention is now directed to the drive arrangements for the trolley and more particularly to Fig 1 which shows an embodiment of the suspension which is provided for the trolley. It will be apparent that the larger drive wheels (not shown) are in fact mounted on a sub frame 20 which is resiliently connected to the triangular frame 1. The sub frame 20 in fact forms a trailing arm suspension since the side members 21,22 of the sub frame 20 have one end pivotally connected by means of a pivot bracket 26 to the triangular frame 1 while the wheels are mounted towards the ends of the side members 21,22. In the region of the drive wheels, there is provided a suspension spring 23 for each side frame as well as there being a tie bar 24 to ensure proper location of the sub frame during use.

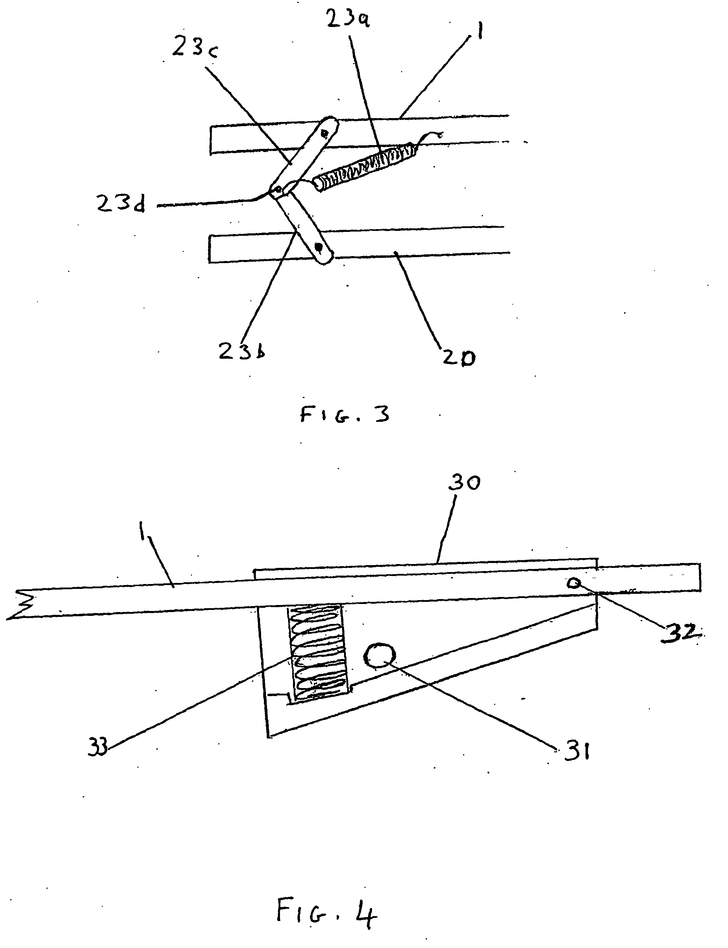

In an alternative embodiment, the suspension spring 23 may be replaced by a suspension arrangement shown in Fig 3. This arrangement comprises two pivoting linkage members 23b,23c with one end of the member 23c pivotally connected to the triangular frame 1 and one end of the member 23b pivotally connected to the subframe 20. The two members 23b,23c are pivotally connected to each other at a point 23d. An extension spring 23a is further provided with one end connected to the frame 1 and the other end connected at any point on the pivoting linkage member 23b. It will be appreciated that the above embodiment provides an alternative suspension arrangement but still achieves the desired suspension for the wheels of the golf trolley.

Since the present embodiment is a powered trolley, the electric motor (not shown) providing the drive force to the drive wheels is mounted on the sub frame 20 as is the battery for the motor.

In addition to the rear wheels being provided with a suspension, it is also possible to provide some springing to the front wheel. An arrangement of the suspension which may be provided to the front wheel of the golf trolley is shown in Fig 4. A pivot bracket 30 is pivotally connected to the triangular frame 1 at a pivot point 32. The bracket 30 is provided with an axle 31 which is arranged to carry the front wheel of the trolley. The suspension is provided for the wheel through the use of a spring 33 which is located near the axle 31. Also, the third wheel can have its lateral orientation adjusted to ensure that the trolley runs straight.

While a trailing arm suspension on a sub frame and the suspension on the third wheel are described above, it will be appreciated that different types of suspension are possible. For example, if the wheels are provided with separate electric motors, it is possible to conceive of independent rear suspension being provided.

Additionally, it will be appreciated further embodiments may be adopted where the spring in the above described embodiment is replaced by any type of resilient means to provide the suspension to the wheels. For example, the resilient means may be a rubber buffer. Also, a damper or dampers could be provided as could combined spring/damper units.

By providing suspension for the wheels, it has been found that the trolley is capable of travelling over rough terrain without causing severe jolting as is often the case with conventional powered trolleys.

Various modifications can be made in order to improve the structural rigidity of the trolley or to remove various frame members which may not be required depending on the particular construction.

## Claims

1. A golf trolley having a golf club-carrying structure (1,6,7) and wheels, with at least one of the wheels connected to the structure by a resilient suspension, **characterised in that** the structure is arranged to receive a golf bag for the golf clubs, the wheels are connected to a subframe (20) and the subframe is resiliently connected to the structure in order to provide the suspension.

2. A golf trolley according to claim 1, wherein the subframe is arranged to carry a drive motor for the wheels.

3. A golf trolley according to claim 1 or 2, wherein the trolley is a 3-wheeled trolley and all wheels are resiliently connected to the structure.

4. A golf trolley according to any one of the preceding claims, wherein the resilient suspension is provided by a suspension spring.

5. A golf trolley according to any one of the preceding claims, wherein said golf trolley is powered by a battery arranged to be mounted on the subframe.

6. A golf trolley according to any one of the preceding claims, wherein said structure is foldable.

7. A golf trolley according to claim 6 wherein the structure (1,6,7) comprises upper (11) and lower golf bag supports spaced apart along the length of foldable central support members (8), the upper golf bag support (11) being formed of two separate members (6,7) which are spaced apart in the region of the central support member.

## Patentansprüche

1. Golftrolley mit einer die Golfschläger tragenden Konstruktion (1, 6, 7) und Rädern, wobei mindestens eines der Räder durch eine federnde Aufhängung mit der Konstruktion verbunden ist, **dadurch gekennzeichnet, dass** die Konstruktion eine Golftasche für die Golfschläger aufnehmen kann, die Räder mit einem Untergestell (20) verbunden sind und das Untergestell federnd mit der Konstruktion verbunden ist, um die Aufhängung bereitzustellen.

2. Golftrolley nach Anspruch 1, bei dem das Untergestell einen Antriebsmotor für die Räder tragen kann.

3. Golftrolley nach Anspruch 1 oder 2, bei dem es sich um einen Trolley mit drei Rädern handelt und alle Räder federnd mit der Konstruktion verbunden sind.

4. Golftrolley nach einem der vorhergehenden Ansprüche, bei dem die federnde Aufhängung durch eine Aufhängefeder bereitgestellt wird.

5. Golftrolley nach einem der vorhergehenden Ansprüche, der von einer Batterie angetrieben wird, die am Untergestell angebracht werden kann.

6. Golftrolley nach einem der vorhergehenden Ansprüche, dessen Konstruktion zusammenklappbar ist.

7. Golftrolley nach Anspruch 6, bei dem die Konstruktion (1, 6, 7) obere (11) und untere Golftaschenhalterungen umfasst, die an der Länge zusammenklappbarer mittlerer Stützelemente (8) entlang voneinander beabstandet sind, wobei die obere Golftaschenhalterung (11) von zwei getrennten Elementen (6, 7) gebildet wird, die im Bereich des mittleren Stützelements voneinander beabstandet sind.

## Revendications

1. Chariot de golf pourvu d'une structure de transport de clubs de golf (1,6,7) et de roues, une roue au moins étant connectée à la structure par une suspension élastique, **caractérisé en ce que** la structure est agencée de sorte à recevoir un sac de golf pour clubs de golf, **en ce que** les roues sont connectées à un faux-châssis (20) et **en ce que** le faux-châssis est connecté élastiquement à la structure de sorte à produire la suspension.

2. Chariot de golf selon la revendication 1, dans lequel le faux-châssis est agencé pour porter un moteur qui mène les roues.

3. Chariot de golf selon la revendication 1 ou 2, dans lequel le chariot est un chariot à trois roues, et toutes les roues sont connectées élastiquement à la structure.

4. Chariot de golf selon l'une quelconque des revendications précédentes, dans lequel la suspension élastique est assurée par un ressort de suspension.

5. Chariot de golf selon l'une quelconque des revendications précédentes, dans lequel ledit chariot de golf est alimenté en énergie par une batterie agencée pour être montée sur le faux-châssis.

6. Chariot de golf selon l'une quelconque des revendications précédentes, dans lequel ladite structure est repliable.

7. Chariot de golf selon la revendication 6, dans lequel la structure (1,6,7) comprend des supports de sac de golf supérieur (11) et inférieur écartés l'un de l'autre le long d'éléments de support centraux repliables (8), le support de sac de golf supérieur (11) étant formé par deux éléments séparés (6,7) qui sont écartés l'un de l'autre dans la région de l'élément de support central.
